# EUROPEAN PATENT SPECIFICATION

(11) **EP 1 468 859 B1**
(45) Date of publication and mention of the grant of the patent: **09.06.2010**
(21) Application number: 04394018.8
(22) Date of filing: 01.04.2004
(51) Int. Cl.: B60K 17/344

(54) **A vehicle driveline**
Antriebskette zu einem Fahrzeug
Ligne d'entraînement pour un vehicule

(30) Priority: 01.04.2003 IE 20030242
(43) Date of publication of application: 20.10.2004
(73) Proprietor: TECHNOLOGY INVESTMENTS LIMITED, County Meath (IE)
(72) Inventor: Timoney, Eanna Pronsias, Navan, County Meath (IE)
(74) Representative: Schütte, Gearoid

(56) References cited:
- EP-A- 1 231 093
- WO-A-93/16908
- DE-A1- 1 965 532
- DE-A1- 2 054 115

## Description

This invention relates to a vehicle driveline for a multi-axle vehicle.

In our earlier European patent Publication No. EP 1231093 we have proposed an improved driveline with multiple drive axles. This publication comprises the features of the preamble of claim 1. Other examples of vehicle drivelines having multiple drive axles are to be found in WO93/16908, DE 1965532 and DE 20 54 115.

The present invention is directed towards a further improved vehicle driveline for addressing the problem of minimising the intrusion of driveline systems into the cargo space of a vehicle and interference with other vehicle systems.

According to the invention there is provided a vehicle driveline for a vehicle with multiple drive axle units, including a primary drive axle unit with an integrated transfer box having a drive input shaft having connection means for connection to a prime mover, drive transmission means for drive transmission from the drive input shaft to a front drive output shaft and a rear drive output shaft for drive connection to further drive axle units to a front and to a rear of the vehicle respectively, **characterised in that** said front drive output shaft and rear drive output shaft lie in substantially the same horizontal plane with respect to the vehicle.

Advantageously the invention provides a driveline for a multi-axle vehicle which includes a primary drive axle unit with an integrated transfer box, which transfers the drive to further drive axles to the front and to the rear of the vehicle. The output shafts extending towards the front and rear of the vehicle can be substantially in the same horizontal plane with respect to the vehicle as the axle output shafts extending towards the wheels on either side of the axle. This is particularly advantageous for packaging the driveline because the various drive shafts which interconnect the axles can all be located at the same low level in the vehicle with minimal drive shaft angles and minimum space interference with other vehicle systems and the cargo space.

In a preferred embodiment the front drive output shaft and the rear drive output shaft have a common rotational axis. That is they are in alignment.

In a further embodiment the inputdrive shaft is driveably connected to a pair of transverse wheel drive outputs for connection to wheels of the primary drive axle unit at each side of the primary drive axle unit, the front drive output shaft and the rear drive output shaft are in substantially the same plane as said wheel drive outputs, and a rotational axis of the front and rear drive output shafts is substantially perpendicular to a rotational axis of the transverse wheel drive outputs.

Conveniently the transverse wheel drive outputs may be located between the front drive output shaft and the rear drive output shaft. This provides a very compact construction facilitating minimal intrusion into cargo space of the vehicle.

In another embodiment the drive input shaft has a pair of spaced-apart input gears, each of the front drive output shaft and the rear drive output shaft having a complementary output gear in meshing engagement with one of said input gears, one of the front drive output shaft and the rear drive output shaft driveably connecting with the transverse wheel drive outputs. Preferably the drive output shaft connects through a differential with the transverse wheel drive outputs, and said differential is located between the output gears.

In another embodiment there is provided a driveline for a multi-axle vehicle having a primary drive axle unit with an integrated transfer box which transfers the drive to further axles to the front and to the rear of the vehicle, **characterised in that** the output shafts extending towards the front and rear of the vehicle are substantially in the same horizontal plane with respect to the vehicle.

In another embodiment there is provided means for transferring drive from the primary drive axle unit to further axles to the front and to the rear of the vehicle by means of propeller shafts, the propeller shafts extending towards the front and rear of the vehicle are substantially in the same horizontal plane with respect to the vehicle.

In another embodiment the propeller shafts extending towards the front and rear of the vehicle are substantial on the same axis.

In a further embodiment the propeller shafts extending towards the front and rear of the vehicle are substantially in the same plane as the transverse wheel drive outputs to half-shafts which extend from the sides of the primary drive axle unit towards the wheels.

In another embodiment the rotational axis of the drive input shaft is parallel to the rotational axis of the drive output shafts.

In another embodiment the drive input shaft is located above the drive output shafts.

In a further embodiment the drive input shaft has an input flange at one end for connection to a prime mover, a first input gear and a second input gear mounted spaced-apart on the drive input shaft, a differential unit on the drive input shaft for splitting the drive between the first input gear and the second input gear, the first input gear driveably engaging a complementary first output gear mounted on the front drive output shaft, the second input gear drivably engaging a complementary second output gear mounted on the rear drive output shaft.

In another embodiment each input gear is mounted directly above its complementary output gear.

In another embodiment the front drive output shaft has a differential for splitting the drive from the first output gear between a drive connector at a front end of the shaft and drive through the gearing at the rear end of the front drive output shaft driveably connected through the differential with the transverse wheel drive outputs.

In another embodiment there is provided a driveline for a multi-axle vehicle having a primary drive axle unit with an integrated transfer box which transfers the drive to further axles to the front and to the rear of the vehicle, **characterised in that** the output shafts extending towards the front and rear of the vehicle are substantially on the same axis.

In a further embodiment there is provided a multi-axle vehicle having a primary drive axle unit with an integrated transfer box which transfers the drive to further axles to the front and to the rear of the vehicle, **characterised in that** the output shafts extending towards the front and rear of the vehicle are substantially in the same plane as the outputs to the half shafts which extend from the sides of the axle unit towards the wheels.

In another embodiment there is provided a vehicle driveline in which the primary drive axle unit with integrated transfer box is located towards either the front or rear of the vehicle and incorporates three differential units, the first of which splits the drive between the front and the rear of the vehicle, the second splits the drive going towards whichever end the said primary drive axle unit is located between the said primary drive axle unit and another drive axle located at the same end of the vehicle, and the third differential splits the drive to the primary drive axle unit between the two sides of the vehicle.

In another aspect the invention provides a primary drive axle unit with an integrated transfer box of the type described herein. The primary drive axle unit has a drive input shaft having means for connection to a prime mover, means for drive transmission from the drive input shaft to a front drive output shaft and a rear drive output shaft for drive connection to further drive axles, said front drive output shaft and rear drive output shaft lying in substantially the same plane. Preferably the front drive output shaft and the rear drive output shaft have a common rotational axis.

In another embodiment the drive input shaft is driveably connected to a pair of transverse wheel drive outputs for connection to wheels of the primary drive axle unit at each side of the primary drive axle unit, the front drive output shaft and the rear drive output shaft being in substantially the same plane as said wheel drive outputs, and a rotational axis of the front and rear drive output shafts being substantially perpendicular to a rotational axis of the transverse wheel drive outputs. Preferably the transverse wheel drive outputs are located between the front drive output shaft and the rear drive output shaft.

The invention will be more clearly understood by the following description of some embodiments thereof, given by way of example only, with reference to the accompanying drawings, in which:

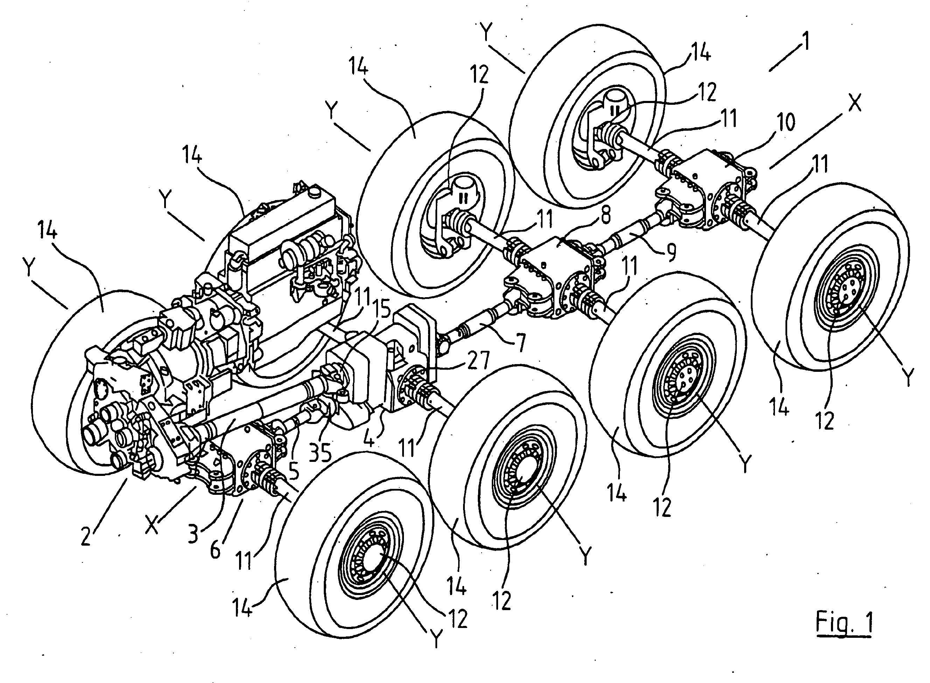

Fig. 1 is a perspective view of an 8x8 vehicle driveline according to the invention illustrating the location of each major component, and
Fig. 2 is a perspective view of an integrated transfer box and drive axle unit according to the invention incorporated in the driveline.

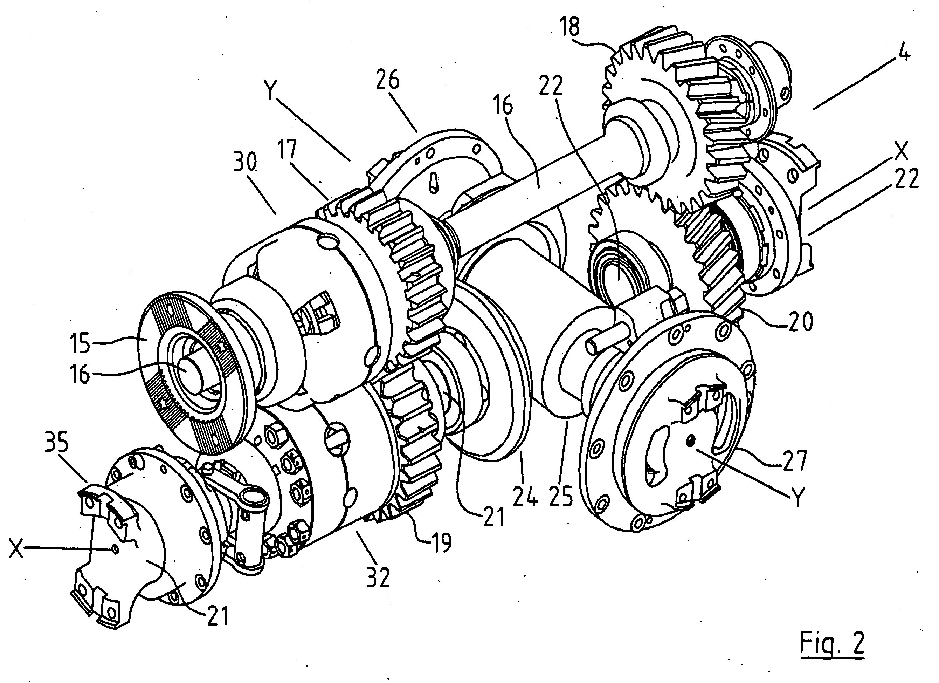

Referring to the drawings there is shown an 8x8 vehicle driveline according to the invention indicated generally by the reference numeral 1. Drive from a prime mover such as an engine and associated transmission gearbox indicated generally by the reference numeral 2 is delivered by a propeller shaft 3 to an integrated transfer box and through-drive primary drive axle unit 4 which is illustrated in more detail in Fig. 2. The primary drive axle unit 4 transmits drive forwardly through propeller shaft 5 to a front axle differential unit 6 and rearwardly through propeller shaft 7 to a third drive axle unit 8. Drive is transmitted onward from the third drive axle unit 8 through a propeller shaft 9 to a rear drive axle unit 10. Each drive axle unit 4, 6, 8, 10 connects through a pair of outwardly extending half-shaft drive shafts 11 with wheel hubs 12 on which wheels 14 of the vehicle are mounted.

Referring in particular to Fig. 2 the integrated transfer box and through-drive primary drive axle unit 4 is shown in more detail. The outer casing of the primary drive axle unit 4 has been omitted for clarity in Fig. 2. The propeller shaft 3 connects to an input flange 15 on a drive input shaft 16. A pair of spaced-apart input gears namely first input gear 17 and second input gear 18 on the drive input shaft 16 cooperate with complementary first and second output gears 19, 20 respectively each of which is carried on an associated front drive output shaft 21 and rear drive output shaft 22 for drive connection via the propeller shafts 5 and 7 respectively to the front drive axle differential unit 6 and the third drive axle unit 8.

The front drive output shaft 21 at its rear end connects through gearing 24 and an axle differential unit 25 with a pair of transverse wheel drive outputs, namely right wheel drive output 26 and left wheel drive output 27, which in turn are connected by drive shafts 11 to the wheels 14 of the primary drive axle unit 4.

It will be noted that the front drive output shaft 21 and the rear drive output shaft 22 lie in substantially the same horizontal plane and also lie along a common rotational axis X. Further, the right and left wheel drive outputs 26, 27 also lie in substantially the same plane as the front and rear drive output shafts 21, 22 and the rotational axis Y of the wheel drive outputs 26, 27 is substantially perpendicular to the rotational axis of the front and rear drive output shafts 21, 22. It will further be noted that the differential unit 25 nests neatly between the front drive output shaft 21 and rear drive output shaft 22 for a compact and low profile assembly.

A differential unit 30 is provided on the drive input shaft 16 for splitting the drive between the front and the rear of the vehicle. Another differential 32 on the front drive output shaft 21 splits the drive going forward through a drive connector 35 at a forward end of the front drive output shaft 21 and the propeller shaft 5 attached thereto and the drive going through gearing 24 to the wheel drive outputs 26, 27.

Ideally all the longitudinal propeller shafts 5, 7, 9 have a substantially common rotational axis X. Also the transverse propeller shafts forming the drive shafts 11 have a rotational axis Y which is perpendicular to axis X. Preferably also all drive propeller shafts 5, 7, 9 and 11 (that is excluding propeller shaft 3) lie on a common substantially horizontal plane.

The rotational axis of the drive input shaft 16 is parallel to the rotational axis X of the drive output shafts and the drive input shaft is located above the drive output shafts,

The invention is not limited to the embodiments hereinbefore described which may be varied in both construction and detail within the scope of the appended claims.

## Claims

1. A vehicle driveline (1) for a vehicle with multiple drive axle units (4, 6, 8, 10), including a primary drive axle unit (4) with an integrated transfer box having a drive input shaft (16) having connection means (15) for connection to a prime mover (2), drive transmission means (17, 18, 19, 20) for drive transmission from the drive input shaft (16) to a front drive output shaft (21) and a rear drive output shaft (22) for drive connection to further drive axle units (6, 8) to a front and to a rear of the vehicle respectively, **characterised in that** said front drive output shaft (21) and rear drive output shaft (22) lie in substantially the same horizontal plane with respect to the vehicle.

2. A vehicle driveline (1) as claimed in claim 1 wherein the front drive output shaft (21) and the rear drive output shaft (22) have a common rotational axis (X).

3. A vehicle driveline (1) as claimed in claim 1 or 2 wherein the drive input shaft (16) is driveably connected to a pair of transverse wheel drive outputs (26, 27) for connection to wheels (14) of the primary drive axle unit (4) at each side of the primary drive axle unit (4), the front drive output shaft (21) and the rear drive output shaft (22) are in substantially the same plane as said wheel drive outputs (26, 27), and a rotational axis (X) of the front and rear drive output shafts (21, 22) is substantially perpendicular to a rotational axis (Y) of the transverse wheel drive outputs (26, 27).

4. A vehicle driveline (1) as claimed in any preceding claim wherein the transverse wheel drive outputs (26, 27) are located between the front drive output shaft (21) and the rear drive output shaft (22).

5. A vehicle driveline (1) as claimed in any preceding claim wherein the drive input shaft (16) has a pair of spaced-apart input gears (17,18), each of the front drive output shaft (21) and the rear drive output shaft (22) having a complementary output gear (19, 20) in meshing engagement with one of said input gears (17, 18), one of the front drive output shaft (21) and the rear drive output shaft (22) driveably connecting with the transverse wheel drive outputs (26, 27).

6. A vehicle driveline (1) as claimed in claim 5 wherein the drive output shaft connects through a differential with the transverse wheel drive outputs, and said differential (25) connected to the transverse wheel drive outputs (26, 27) is located between the output gears (19, 20).

7. A vehicle driveline (1) as claimed in any preceding claim wherein there is provided means for transferring drive from the primary drive axle unit (4) to further axles to the front and to the rear of the vehicle by means of propeller shafts (5, 7, 9), and the propeller shafts (5, 7, 9) extending towards the front and rear of the vehicle are substantially in the same horizontal plane with respect to the vehicle.

8. A vehicle driveline (1) as claimed in claim 7 wherein the propeller shafts (5, 7, 9) extending towards the front and rear of the vehicle are substantial on the same axis (X).

9. A vehicle driveline (1) as claimed in claim 8 wherein the propeller shafts (5, 7, 9) extending towards the front and rear of the vehicle are substantially in the same plane as the transverse wheel drive outputs (26, 27) to half-shafts (11) which extend from the sides of the primary drive axle unit (4) towards the wheels (14).

10. A vehicle driveline (1) as claimed in any preceding claim wherein the rotational axis of the drive input shaft (16) is parallel to the rotational axis (X) of the drive output shafts (21, 22).

11. A vehicle driveline (1) as claimed in any preceding claim wherein the drive input shaft (16) is located above the drive output shafts (21, 22).

12. A vehicle driveline (1) as claimed in any preceding claim wherein the drive input shaft (16) has an input flange (15) at one end for connection to a prime mover (2), a first input gear (17) and a second input gear (18) mounted spaced-apart on the drive input shaft (16), a differential unit (30) on the drive input shaft (16) for splitting the drive between the first input gear (17) and the second input gear (18), the first input gear (17) driveably engaging a complementary first output gear (19) mounted on the front drive output shaft (21), the second input gear (18) driveably engaging a complementary second output gear (20) mounted on the rear drive output shaft (22).

13. A vehicle driveline (1) as claimed in claim 12 wherein each input gear (17, 18) is mounted directly above its complementary output gear (19, 20).

14. A vehicle driveline (1) as claimed in claim 12 or claim 13 wherein the front drive output shaft (21) has a differential (32) for splitting the drive from the first output gear (19) between a drive connector (35) at a front end of the shaft (21) and drive through the gearing (24) at the rear end of the front drive output shaft (21) driveably connected through the differential (25) with the transverse wheel drive outputs (26, 27).

15. A vehicle incorporating a driveline (1) as claimed in any preceding claim,

## Patentansprüche

1. Fahrzeugantriebsstrang (1) für ein Fahrzeug mit mehreren Antriebsachseneinheiten (4, 6, 8, 10), das Folgendes umfasst: eine primäre Antriebsachseneinheit (4) mit einem integrierten Verteilergetriebe, das eine Antriebswelle (16) mit Verbindungsmitteln (15) für eine Verbindung mit einem Antriebsmotor (2) hat, ein Antriebsübertragungsmittel (17, 18, 19, 20) zum Übertragen des Antriebs von der Antriebswelle (16) auf eine Frontantrieb-Abtriebswelle (21) und eine Heckantrieb-Abtriebswelle (22) für eine Antriebsverbindung mit weiteren Antriebsachseneinheiten (6, 8) jeweils zur Front und zum Heck des Fahrzeugs, **dadurch gekennzeichnet, dass** die genannte Frontantrieb-Abtriebswelle (21) und die genannte Heckantrieb-Abtriebswelle (22) im Wesentlichen in derselben horizontalen Ebene mit Bezug auf das Fahrzeug liegen.

2. Fahrzeugantriebsstrang (1) nach Anspruch 1, wobei die Frontantrieb-Abtriebswelle (21) und die Heckantrieb-Abtriebswelle (22) eine gemeinsame Rotationsachse (X) haben.

3. Fahrzeugantriebsstrang (1) nach Anspruch 1 oder 2, wobei die Antriebswelle (16) antriebsmäßig mit einem Paar transversaler Radantriebsausgänge (26, 27) für die Verbindung mit Rädern (14) der primären Antriebsachseneinheit (4) auf jeder Seite der primären Antriebsachseneinheit (4) verbunden ist, die Fronantrieb-Abtriebswelle (21) und die Heckantrieb-Abtriebswelle (22) im Wesentlichen in derselben Ebene liegen wie die genannten Radantriebsausgänge (26, 27), und eine Rotationsachse (X) der Front- und Heckantrieb-Abtriebswellen (21, 22) im Wesentlichen lotrecht zu einer Rotationsachse (Y) der transversalen Radantriebsausgänge (26, 27) ist.

4. Fahrzeugantriebsstrang (1) nach einem der vorherigen Ansprüche, wobei sich die transversalen Radantriebsausgänge (26, 27) zwischen der Frontantrieb-Abtriebswelle (21) und der Heckantrieb-Abtriebswelle (22) befinden.

5. Fahrzeugantriebsstrang (1) nach einem der vorherigen Ansprüche, wobei die Antriebswelle (16) ein Paar beabstandete Antriebszahnräder (17, 18) aufweist, wobei die Frontantrieb-Abtriebswelle (21) und die Heckantrieb-Abtriebswelle (22) jeweils ein komplementäres Abtriebszahnrad (19, 20) im Kämmeingriff mit einem der genannten Antriebszahnräder (17, 18) hat, wobei die Frontantrieb-Abtriebswelle (21) oder die Heckantrieb-Abtriebswelle (22) antriebsmäßig mit den transversalen Radantriebsausgängen (26, 27) verbunden ist.

6. Fahrzeugantriebsstrang (1) nach Anspruch 5, wobei die Abtriebswelle über ein Differential mit den transversalen Radantriebsausgängen verbunden ist und das genannte mit den transversalen Radantriebsausgängen (26, 27) verbundene Differential (25) sich zwischen den Abtriebszahnrädern (19, 20) befindet.

7. Fahrzeugantriebsstrang (1) nach einem der vorherigen Ansprüche, wobei Mittel zum Übertragen des Antriebs von der primären Antriebsachseneinheit (4) auf weitere Front- und Heckachsen des Fahrzeugs mittels Kardanwellen (5, 7, 9) vorgesehen ist und die zur Front und zum Heck des Fahrzeugs verlaufenden Kardanwellen (5, 7, 9) im Wesentlichen in derselben horizontalen Ebene mit Bezug auf das Fahrzeug liegen.

8. Fahrzeugantriebsstrang (1) nach Anspruch 7, wobei die zur Front und zum Heck des Fahrzeugs verlaufenden Kardanwellen (5, 7, 9) im Wesentlichen auf derselben Achse (X) liegen.

9. Fahrzeugantriebsstrang (1) nach Anspruch 8, wobei die zur Front und zum Heck des Fahrzeugs verlaufenden Kardanwellen (5, 7, 9) im Wesentlichen in derselben Ebene liegen wie die transversalen Radantriebsausgänge (26, 27) von Achswellen (11), die von den Seiten der primären Antriebsachseneinheit (4) zu den Rädern (14) hin verlaufen.

10. Fahrzeugantriebsstrang (1) nach einem der vorherigen Ansprüche, wobei die Rotationsachse der Antriebswelle (16) parallel zur Rotationsachse (X) der Abtriebswellen (21, 22) verläuft.

11. Fahrzeugantriebsstrang (1) nach einem der vorherigen Ansprüche, wobei sich die Antriebswelle (16) über den Abtriebswellen (21, 22) befindet.

12. Fahrzeugantriebsstrang (1) nach einem der vorherigen Ansprüche, wobei die Antriebswelle (16) Folgendes aufweist: einen Antriebsflansch (15) an einem Ende für die Verbindung mit einem Antriebsmotor (2), ein erstes Antriebszahnrad (17) und ein zweites Antriebszahnrad (18), die auf der Antriebswelle (16) beabstandet montiert sind, eine Differentialeinheit (30) auf der Antriebswelle (16) zum Teilen des Antriebs zwischen dem ersten Antriebszahnrad (17) und dem zweiten Antriebszahnrad (18), wobei das erste Antriebszahnrad (17) antriebsmäßig in ein komplementäres, auf der Frontantrieb-Abtriebswelle (21) montiertes erstes Abtriebszahnrad (19) eingreift, wobei das zweite Antriebszahnrad (18) antriebsmäßig in ein komplementäres, auf der Heckantrieb-Abtriebswelle (22) montiertes zweites Abtriebszahnrad (20) eingreift.

13. Fahrzeugantriebsstrang (1) nach Anspruch 12, wobei jedes Antriebszahnrad (17, 18) direkt über seinem komplementären Abtriebszahnrad (19, 20) montiert ist.

14. Fahrzeugantriebsstrang (1) nach Anspruch 12 oder Anspruch 13, wobei die Frontantrieb-Abtriebswelle (21) ein Differential (32) zum Aufteilen des Antriebs vom ersten Abtriebszahnrad (19) zwischen einem Antriebsverbinder (35) an einem vorderen Ende der Welle (21) und einem Antrieb durch die Zahnräder (24) am hinteren Ende der Frontantrieb-Abtriebswelle (21) hat, die antriebsmäßig durch das Differential (25) mit den transversalen Radantriebsausgängen (26, 27) verbunden ist.

15. Fahrzeug, das einen Antriebsstrang (1) nach einem der vorherigen Ansprüche beinhaltet.

## Revendications

1. Chaîne cinématique de véhicule (1) pour un véhicule comportant de multiples ponts moteurs (4, 6, 8, 10), comportant un pont moteur principal (4) à boîte de transfert intégrée ayant un arbre d'entrée de transmission (16) comportant des moyens de connexion (15) pour la connexion à un moteur principal (2), des moyens de transmission d'entraînement (17, 18, 19, 20) pour la transmission d'entraînement depuis l'arbre d'entrée de transmission (16) jusqu'à un arbre de sortie de transmission avant (21) et un arbre de sortie de transmission arrière (22) en vue de leur connexion d'entraînement à d'autres ponts moteur (6, 8) vers un avant et un arrière du véhicule respectivement, **caractérisé en ce que** ledit arbre de sortie de transmission avant (21) et ledit arbre de sortie de transmission arrière (22) reposent dans sensiblement le même plan horizontal par rapport au véhicule.

2. Chaîne cinématique de véhicule (1) selon la revendication 1, dans laquelle l'arbre de sortie de transmission avant (21) et l'arbre de sortie de transmission arrière (22) ont un axe de rotation commun (X).

3. Chaîne cinématique de véhicule (1) selon la revendication 1 ou 2, dans laquelle l'arbre d'entrée de transmission (16) est connecté de façon entraînable à une paire de sorties d'entraînement de roues transversales (26, 27) pour la connexion aux roues (14) du pont moteur principal (4) de chaque côté du pont moteur principal (4), l'arbre de sortie de transmission avant (21) et l'arbre de sortie de transmission arrière (22) sont essentiellement dans le même plan que lesdits sorties d'entraînement de roues (26, 27), et un axe de rotation (X) des arbres de sortie de transmission avant et arrière (21, 22) est sensiblement perpendiculaire à un axe de rotation (Y) des sorties d'entraînement de roues transversales (26, 27).

4. Chaîne cinématique de véhicule (1) selon l'une quelconque des revendications précédentes, dans laquelle les sorties d'entraînement de roues transversales (26, 27) sont situées entre l'arbre de sortie de transmission avant (21) et l'arbre de sortie de transmission arrière (22).

5. Chaîne cinématique de véhicule (1) selon l'une quelconque des revendications précédentes, dans laquelle l'arbre d'entrée de transmission (16) comporte une paire de pignons d'entrée espacés (17, 18), chacun de l'arbre de sortie de transmission avant (21) et de l'arbre de sortie de transmission arrière (22) ayant un pignon de sortie complémentaire (19,20) engrené avec l'un desdits pignons d'entrée (17, 18), l'un de l'arbre de sortie de transmission avant (21) et de l'arbre de sortie de transmission arrière (22) étant connecté de façon entraînable aux sorties d'entraînement de roues transversales (26, 27).

6. Chaîne cinématique de véhicule (1) selon la revendication 5, dans laquelle l'arbre de sortie de transmission est connecté par le biais d'un différentiel aux sorties d'entraînement de roues transversales, et ledit différentiel (25) connecté aux sorties d'entraînement de roues transversales (26, 27) est situé entre les pignons de sortie (19, 20).

7. Chaîne cinématique de véhicule (1) selon l'une quelconque des revendications précédentes, dans laquelle est fourni un moyen pour transférer la transmission depuis le pont moteur principal (4) jusqu'à d'autres ponts à l'avant et à l'arrière du véhicule au moyen d'arbres de transmission (5, 7, 9) et les arbres de transmission (5, 7 ,9) s'étendant vers l'avant et l'arrière du véhicule sont sensiblement dans le même plan horizontal par rapport au véhicule.

8. Chaîne cinématique de véhicule (1) selon la revendication 7, dans laquelle les arbres de transmission (5, 7 ,9) s'étendant vers l'avant et l'arrière du véhicule sont sensiblement sur le même axe (X).

9. Chaîne cinématique de véhicule (1) selon la revendication 8, dans laquelle les arbres de transmission (5, 7 ,9) s'étendant vers l'avant et l'arrière du véhicule sont sensiblement dans le même plan que les sorties d'entraînement de roues transversales (26, 27) jusqu'à des demi-ponts (11) qui s'étendent depuis les côtés du pont moteur principal (4) vers les roues (14).

10. Chaîne cinématique de véhicule (1) selon l'une quelconque des revendications précédentes, dans laquelle l'axe de rotation de l'arbre d'entrée de transmission (16) est parallèle à l'axe de rotation (X) des arbres de sortie de transmission (21, 22).

11. Chaîne cinématique de véhicule (1) selon l'une quelconque des revendications précédentes, dans laquelle l'arbre d'entrée de transmission (16) est situé au-dessus des arbres de sortie de transmission (21, 22).

12. Chaîne cinématique de véhicule (1) selon l'une quelconque des revendications précédentes, dans laquelle l'arbre d'entrée de transmission (16) comporte un flasque d'entrée (15) à une extrémité pour la connexion à un moteur principal (2), un premier pignon d'entrée (17) et un second pignon d'entrée (18) montés avec un espacement sur l'arbre d'entrée de transmission (16), un différentiel (30) sur l'arbre d'entrée de transmission (16) pour distribuer la transmission entre le premier pignon d'entrée (17) et le second pignon d'entrée (18), le premier pignon d'entrée (17) engrenant en entraînement un premier pignon de sortie complémentaire (19) monté sur l'arbre de sortie de transmission avant (21), le second pignon d'entrée (18) engrenant en entraînement un second pignon de sortie complémentaire (20) monté sur l'arbre de sortie de transmission arrière (22).

13. Chaîne cinématique de véhicule (1) selon la revendication 12, dans laquelle chaque pignon d'entrée (17, 18) est monté directement au-dessus de son pignon de sortie complémentaire (19, 20).

14. Chaîne cinématique de véhicule (1) selon la revendication 12 ou la revendication 13, dans laquelle l'arbre de sortie de transmission avant (21) comporte un différentiel (32) pour distribuer la transmission provenant du premier pignon de sortie (19) entre un connecteur de transmission (35) situé à une première extrémité de l'arbre (21) et la transmission par le biais de l'engrenage (24) situé à l'extrémité arrière de l'arbre de sortie de transmission avant (21) connecté en entraînement par le biais du différentiel (25) aux sorties d'entraînement de roues transversales (26, 27).

15. Véhicule incorporant une chaîne cinématique (1) selon l'une quelconque des revendications précédentes.
